(19) **Europäisches Patentamt / European Patent Office / Office européen des brevets**

(11) **EP 4 273 767 A1**

(12) **EUROPEAN PATENT APPLICATION**
published in accordance with Art. 153(4) EPC

(43) Date of publication:
**08.11.2023 Bulletin 2023/45**

(21) Application number: **21888403.9**

(22) Date of filing: **21.10.2021**

(51) International Patent Classification (IPC):
**G06Q 10/04** *(2023.01)*        **G06Q 30/06** *(2023.01)*
**G07F 11/00** *(2006.01)*        **G07F 9/02** *(2006.01)*

(86) International application number:
**PCT/CN2021/125244**

(87) International publication number:
**WO 2022/095706 (12.05.2022 Gazette 2022/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.11.2020 CN 202011212917**

(71) Applicant: **Beijing Jingdong Qianshi Technology Co., Ltd.**
**Beijing 100176 (CN)**

(72) Inventor: **ZHENG, Ruochen**
**Beijing 100176 (CN)**

(74) Representative: **Witte, Weller & Partner Patentanwälte mbB**
**Postfach 10 54 62**
**70047 Stuttgart (DE)**

(54) **METHOD, APPARATUS, CONTAINER, DEVICE, AND MEDIUM FOR OBTAINING PRODUCT LAYOUT DATA**

(57)    Provided is a method of acquiring commodity layout data, including: determining a minimum weight difference of each effective layout combination of a plurality of effective layout combinations; and acquiring, according to a preset constraint condition, at least two current layout combinations from the plurality of effective layout combinations as the commodity layout data for a commodity layout of a gravity container; wherein, the preset constraint condition includes a weight constraint between a lower limit weight difference corresponding to the plurality of effective layout combinations and a minimum weight difference corresponding to a current layout combination of the at least two current layout combinations. In addition, the present disclosure further provides an apparatus of acquiring commodity layout data, a gravity container, an electronic device, and a computer-readable storage medium.

S101

A minimum weight difference of each effective layout combination of a plurality of effective layout combinations is determined

S102

According to a preset constraint condition, at least two current layout combinations are acquired from the plurality of effective layout combinations as the commodity layout data

FIG. 1

**Description**

TECHNICAL FIELD

The present disclosure relates to a field of computer technology, and in particular, to a method of acquiring commodity layout data, an apparatus of acquiring commodity layout data, a gravity container, an electronic device, and a computer-readable storage medium.

BACKGROUND

In a field of intelligent retail technology, more and more intelligent unmanned containers appear in people's daily life. Compared with a vending machine in the prior art, the intelligent unmanned container may bring a user a better shopping experience through an application of advanced technologies such as artificial intelligence, wherein, as a novel product of the intelligent unmanned container, a gravity container has developed rapidly in the field of intelligent retail technology. For the gravity container, when a user takes a certain commodity, an electronic scale arranged under the commodity will calculate a weight change to identify a category of the commodity taken by the user and a settlement is performed. However, with an increasing demand of users, requirements of category and quantity for the gravity container are becoming higher and higher, resulting in the existing gravity container being unable to effectively identify the category and/or quantity of commodities taken by a user, greatly reducing a user experience.

SUMMARY

In view of the above, embodiments of the present disclosure provide a method of acquiring commodity layout data, an apparatus of acquiring commodity layout data, a gravity container, an electronic device, and a computer-readable storage medium that may make the gravity container have a better identification effect and a higher user experience.

An aspect of the present disclosure provides a method of acquiring commodity layout data, including: determining a minimum weight difference of each effective layout combination of a plurality of effective layout combinations; and acquiring, according to a preset constraint condition, at least two current layout combinations from the plurality of effective layout combinations as the commodity layout data for a commodity layout of a gravity container; wherein, the preset constraint condition includes a weight constraint between a lower limit weight difference corresponding to the plurality of effective layout combinations and a minimum weight difference corresponding to a current layout combination of the at least two current layout combinations.

According embodiments of the present disclosure, before determining a minimum weight difference of each effective layout combination of a plurality of effective layout combinations, the method further includes: determining a plurality of potential layout combinations according to the number of categories of to-be-laid-out commodities; and determining the plurality of effective layout combinations from the plurality of potential layout combinations according to a business constraint condition.

According embodiments of the present disclosure, the business constraint condition includes a height constraint between a commodity height of each category of commodity in each effective layout combination and a height of a cargo lane of the gravity container, and a mutually exclusive constraint between at least two categories of commodities in each effective layout combination corresponding to any cargo lane of the gravity container.

According embodiments of the present disclosure, the determining a minimum weight difference of each effective layout combination of a plurality of effective layout combinations includes: determining a mixed integer model corresponding to the minimum weight difference according to weights of at least two sub-combinations in each effective layout combination; and acquiring the minimum weight difference of each effective layout combination according to the mixed integer model.

According embodiments of the present disclosure, before the acquiring, according to a preset constraint condition, at least two current layout combinations from the plurality of effective layout combinations as the commodity layout data, the method further includes: acquiring an effective layout vector corresponding to each category of commodity in each effective layout combination.

According embodiments of the present disclosure, the preset constraint condition further includes a category constraint between a combined layout model of each effective layout combination and the effective layout vector, and a cargo lane constraint between the combined layout model, the effective layout vector and the number of cargo lanes of the gravity container.

According embodiments of the present disclosure, the acquiring, according to a preset constraint condition, at least two current layout combinations from the plurality of effective layout combinations as the commodity layout data, the method further includes: maximizing the lower limit weight difference when the number of categories of commodities in the at least two current layout combinations is the same as the number of categories of to-be-laid-out commodities, so as to determine the at least two current layout combinations as the commodity layout data.

Another aspect of the present disclosure provides an apparatus of acquiring commodity layout data, including: a weight determination module configured to determine a minimum weight difference of each effective layout combination of a plurality of effective layout combinations; and a layout acquisition module configured to acquire, according to a preset constraint condition, at least two current layout combinations from the plurality of effective layout combinations as the commodity layout data for a commodity layout of a cargo lane in a gravity container; wherein, the preset constraint condition includes a weight constraint between a lower limit weight difference corresponding to the plurality of effective layout combinations and a minimum weight difference corresponding to a current layout combination of the at least two current layout combinations.

Another aspect of the present disclosure provides a gravity container, including the apparatus described above to implement the method described above.

Another aspect of the present disclosure provides an electronic device, including: one or more processors; and a storage apparatus for storing one or more programs, wherein, the one or more programs, when executed by the one or more processors, cause the one or more processors to implement the method described above.

Another aspect of the present disclosure provides a computer-readable storage medium having executable instructions therein, wherein the instructions, when executed by a processor, cause the processor to implement the method described above.

The above-mentioned one or more embodiments have following advantages or beneficial effects: through the method of acquiring commodity layout data in the present disclosure, a commodity layout solution of an unmanned gravity container may be quickly obtained, and on the basis of the commodity layout solution, an identification accuracy and identification speed of a commodity taken by a user may be effectively improved according to gravity when the gravity container has more commodity categories, and at the same time, specific commodity categories are bound for each cargo lane, so that a placing space of the cargo lane is utilized to a maximum extent.

BRIEF DESCRIPTION OF THE DRAWINGS

FIG. 1 schematically shows a flowchart of a method of acquiring commodity layout data according to an embodiment of the present disclosure.

FIG. 2 schematically shows a flowchart of a method of acquiring commodity layout data according to another embodiment of the present disclosure.

FIG. 3 schematically shows a flowchart of a method of acquiring commodity layout data according to another embodiment of the present disclosure.

FIG. 4 schematically shows a flowchart of a method of acquiring commodity layout data according to another embodiment of the present disclosure.

FIG. 5 schematically shows a flowchart of a method of acquiring commodity layout data according to another embodiment of the present disclosure.

FIG. 6 schematically shows a composition diagram of an apparatus of acquiring commodity layout data according to an embodiment of the present disclosure.

FIG. 7 schematically shows a block diagram of an electronic device suitable for realizing the above-mentioned method of acquiring commodity layout data according to embodiments of the present disclosure.

DETAILED DESCRIPTION OF EMBODIMENTS

Embodiments of the present disclosure will be described below with reference to the accompanying drawings. It should be understood, however, that these descriptions are merely exemplary and are not intended to limit the scope of the present disclosure. In the following detailed descriptions, for purposes of explanation, numerous specific details are set forth in order to provide a thorough understanding of embodiments of the present disclosure. It is obvious, however, that one or more embodiments may be implemented without these specific details. In addition, in the following descriptions, descriptions of well-known structures and technologies are omitted to avoid unnecessarily obscuring the concept of the present disclosure.

Terms used herein are for the purpose of describing embodiments only and are not intended to limit the present disclosure. Terms "comprising", "including" and the like used herein specify a presence of the feature, step, operation and/or component, but do not preclude a presence or addition of one or more other features, steps, operations or components.

All terms (including technical and scientific terms) used herein have the same meaning as commonly understood by those skilled in the art, unless otherwise defined. It should be noted that the terms used herein should be construed to have meanings consistent with the context of the present description and should not be construed in an idealized or overly rigid manner.

Where expressions like "at least one of A, B, and C, etc." are used, they should generally be interpreted in accordance with the meaning of the expression as commonly understood by those skilled in the art (e.g., "a system having at least one of A, B and C" should include, but not be limited to, a system having A alone, having B alone, having C alone, having A and B, having A and C, having B and C, and/or having A, B, C, etc.). Where expressions like "at least one of A, B, or C, etc." are used, they should generally be interpreted in accordance with the meaning of the expressions as commonly understood by those skilled in the art (e.g., "a system having at least one of A, B or C" should include, but not be limited to, a system having A alone, having B alone, having C alone, having A and B, having A and C, having B and C, and/or having A, B, C, etc.).

An unmanned gravity container (gravity container for short) generally has multi-layer shelves. Each layer of shelves may have a plurality of cargo lanes. An electronic scale is placed at a bottom of each cargo lane, and a to-be-sold commodity is placed on the electronic scale. There are a plurality of commodities on each electronic scale, which may be the same category or a combination of different categories. The gravity container may identify the category and quantity of a commodity taken by a user through a change of gravity, which utilizes a sale space to a maximum extent, with higher freedom of commodity placement, no need for an electronic label, faster and more accurate calculation speed, wider application, and has advantages of scalability and low operating costs. Therefore, in the field of intelligent sales technology, with a rapid development of artificial intelligence technology, more and more gravity containers appear in people's social life.

Specifically, due to an increasing demand of users, requirements of category and quantity for the gravity container are becoming higher and higher, resulting in the existing gravity container being unable to effectively identify the category and/or quantity of commodities taken by a user, greatly reducing a user experience, which are embodied in following aspects.

(1) More than one category of commodities may be placed on a same electronic scale, and it is necessary to identify a commodity taken by a user according to a change of a total weight of the commodities on the electronic scale.

(2) Different categories of commodities may have similar weights. For example, unit weights of the commodity of Category A and the commodity of Category B placed on the same electronic scale are equal to M. When the weight of a commodity taken by a user changes to M, it is impossible to determine whether the commodity taken is the commodity of Category A or the commodity of Category B.

(3) Different categories of commodities may have similar weights under different quantities. For example, the weight of one commodity of Category A and the weight of a combination of two commodities of Category B placed on the same electronic scale are equal to M, thus when the weight of a commodity taken by a user changes to M, it is impossible to determine whether the commodity taken is one commodity of Category A or two commodities of Category B.

(4) There are differences in the weight of individual commodity of the same category. For example, for three commodities A1, A2 and A3 of Category A placed on the same electronic scale, the calibrated specification weight is set to M, while the actual weight of commodity A1 of Category A is $M+\Delta m1$, the actual weight of commodity A2 of Category A is $M+\Delta m2$, the actual weight of commodity A3 of Category A is $M+\Delta m3$, and $\Delta m1$, $\Delta m2$ and $\Delta m3$ are less than a specified threshold $\Delta m0$. Therefore, in a case where the electronic scale itself has a measuring error, this further brings a difficulty to the identification of the commodity.

In addition, considering an operating cost, it is not possible to require an operator to accurately place commodities of determined categories, and at the same time, it is also necessary to maximally utilize a placing space of a cargo lane.

In view of the above, embodiments of the present disclosure provide a method of acquiring commodity layout data, an apparatus of acquiring commodity layout data, a gravity container, an electronic device, and a computer-readable storage medium that may make the gravity container have a better identification effect and a higher user experience.

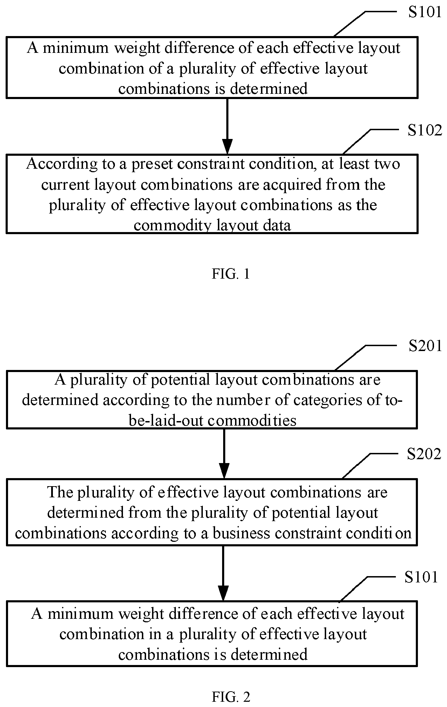

FIG. 1 schematically shows a flowchart of a method of acquiring commodity layout data according to an embodiment of the present disclosure.

It should be noted that in embodiments of the present disclosure, in order to facilitate the understanding of technical contents of the present disclosure by those skilled in the art, the gravity container may have five layers of shelves, each layer of shelves may have two cargo lanes, and a bottom of each cargo lane may be correspondingly provided with an electronic scale. The specification of each cargo lane is consistent, thus the specification of each shelf is also consistent.

As shown in FIG. 1, an aspect of the present disclosure provides a method of acquiring commodity layout data, including: operation S101 and operation S102.

In operation S101, a minimum weight difference of each effective layout combination of a plurality of effective layout combinations is determined.

In operation S102, according to a preset constraint condition, at least two current layout combinations are acquired from the plurality of effective layout combinations as the commodity layout data for a commodity layout of a gravity container.

The preset constraint condition includes a weight constraint between a lower limit weight difference corresponding to the plurality of effective layout combinations and a minimum weight difference corresponding to a current layout combination of the at least two current layout combinations.

In embodiments of the present disclosure, the commodity layout data corresponds to a category combination of commodities that may be placed on each cargo lane of the container. For example, three categories of commodities, namely, the commodity of Category A, the commodity of Category B and the commodity of Category C, are placed on a cargo lane as a combination, and the commodity category combination of A-B-C corresponding to the cargo lane belongs to one data in the commodity layout data. For a gravity container with five layers of shelves and two cargo lanes on each shelf, since some cargo lanes may be empty and a plurality of cargo lanes may be set with the same commodity category combination, the gravity container may have up to 10 commodity category combinations as commodity layout data. One category of commodity represents one kind of commodity, that is, each category of commodity may have a plurality of commodities.

The effective layout combination is obtained according to the number of categories of to-be-laid-out commodities in a commodity pool for commodity combination, so as to obtain the commodity category combination from a plurality of effective layout combinations. Specifically, when the number of categories of to-be-laid-out commodities in the commodity pool is 100, there are 100 categories of to-be-laid-out commodities in the commodity pool. The effective layout combination is a commodity category combination obtained after screening potential layout combinations described below. In each effective layout combination, a plurality of sub-combinations may be obtained through a weight combination between commodities of each category, and a minimum weight difference of the effective layout combination may be obtained by comparing weight differences between the sub-combinations. For details, please refer to the following.

By screening a plurality of effective layout combinations, at least two current layout combinations may be obtained, and the current layout combinations are equivalent to the above-mentioned commodity category combination. The layout data of at least two current layout combinations may be used as a final commodity layout data. The screening of effective layout combinations needs to be performed through a preset constraint condition. The preset constraint condition is a screening rule defined by a relationship between fixed feature attributes of the gravity container and the number of categories of commodities actually taken by a user and fixed feature attributes of the commodities which needs to be considered by a technician of the gravity container when the commodities are laid out to the gravity container, and the preset constraint condition may include a weight constraint, a category constraint, a height constraint, etc. For details, please refer to the following. The effective layout combination that meets the screening rule is the current layout combination, and the effective layout combination that does not meet the screening rule will be removed and will not be considered as the current layout combination. The fixed characteristic attributes of the gravity container include the maximum number of categories of commodities placed on the electronic scale of the cargo lane, a height of the cargo lane, the number of cargo lanes, etc. The fixed characteristic attributes of the commodity include a height of the commodity, a mutually exclusive relationship between the commodities, etc.

In addition, the weight constraint in the preset constraint condition is a weight screening rule between a lower limit weight difference in the plurality of effective layout combinations and a minimum weight difference corresponding to a current layout combination of the at least two current layout combinations. The above-mentioned current layout combination in the present disclosure needs to meet the weight screening rule. The lower limit weight difference in the plurality of effective layout combinations is a minimum value of the minimum weight differences in each effective layout combination in the plurality of effective layout combinations. For example, the plurality of effective layout combinations include combination a, combination b, and combination c, and a minimum weight difference in the effective layout combination a is $\Delta ma$, a minimum weight difference in the effective layout combination b is $\Delta mb$, a minimum weight difference in the effective layout combination c is $\Delta mc$, then a minimum value in $\Delta ma$, $\Delta mb$, and $\Delta mc$ is the lower limit weight difference in the above-mentioned plurality of effective layout combinations.

Through the method of acquiring commodity layout data in the present disclosure, a commodity layout solution of an unmanned gravity container may be quickly obtained, and on the basis of the commodity layout solution, an identification accuracy and identification speed of a commodity taken by a user may be effectively improved according to gravity when the gravity container has more commodity categories, and at the same time, specific commodity categories are bound for each cargo lane, so that a placing space of the cargo lane is utilized to a maximum extent.

FIG. 2 schematically shows a flowchart of a method of acquiring commodity layout data according to another embodiment of the present disclosure.

As shown in FIG. 2, according to embodiments of the present disclosure, before S101 of determining a minimum weight difference of each effective layout combination in a plurality of effective layout combinations, the method further includes operation S201 and operation S202.

In operation S201, a plurality of potential layout combinations are determined according to the number of categories of to-be-laid-out commodities.

In operation S202, the plurality of effective layout combinations are determined from the plurality of potential layout combinations according to a business constraint condition.

According to embodiments of the present disclosure, the business constraint condition includes a height constraint between a commodity height of each category of commodity in each effective layout combination and a height of a cargo lane of the gravity container, and a mutually exclusive constraint between at least two categories of commodities in each effective layout combination corresponding to any cargo lane of the gravity container.

The data of to-be-laid-out commodities of with a plurality of categories is set in the commodity pool, and the commodity pool is a total commodity selection source planned for the commodity placement of each gravity container by an operator (such as a merchant) of the gravity container according to market sales volume, its own inventory and other factors, and may also provide the weight of each commodity, individual weight error, and error information of the electronic scale at the same time.

For a single cargo lane of the gravity container, if the maximum number of categories of commodities to be placed is required to be no more 3, and the number of categories of to-be-laid-out commodities in the commodity pool is n, then the number Q of the potential layout combinations meets the following equation (1):

$$Q = C_n^1 + C_n^2 + C_n^3$$

For example, when the number of categories of to-be-laid-out commodities is 100, the number Q of the plurality of potential layout combinations is the number of all combinations of commodity categories that may be placed in a single cargo lane, i.e.,

$$Q = C_{100}^1 + C_{100}^2 + C_{100}^3$$

In embodiments of the present disclosure, the business constraint condition may be understood as one of the preset constraint conditions, and is used for preliminary screening of a plurality of potential layout combinations to obtain a plurality of effective layout combinations. The business constraint condition mainly includes a height constraint and a mutually exclusive constraint. In addition, the business constraint condition further includes a constraint on users' taking, a constraint on commodity existence of a cargo lane, a constraint on the number of categories placed in a cargo lane, and a constraint on placement of commodity of a same category. The constraint on user's taking may be understood as presetting that a user take a plurality of commodities at one time during an actual use of the gravity container, wherein the maximum number of commodities taken by the user from a single electronic scale is 2 categories. The constraint on the number of categories placed in a cargo lane may be understood as that due to a restriction of an area of commodity placement of an electronic scale in the cargo lane, categories of commodities placed in a single cargo lane is required to be at most 3 categories. The constraint on commodity existence of a cargo lane may be understood as that each cargo lane in the gravity container needs to be placed with at least one category of commodity, and there must be no empty cargo lane. The constraint on placement of commodity of a same category may be understood as that commodity of the same category may only be placed in a few cargo lanes. It should be noted that the above-mentioned specific figures are only used to illustrate embodiments of the present disclosure and are not intended to limit the scope of protection of the present disclosure, which will not be repeated here.

In embodiments of the present disclosure, a commodity height of each category of commodity shall not exceed a height of a cargo lane of a gravity container, otherwise the commodity may not be placed into the cargo lane, namely the height constraint in the business constraint condition. In a case of satisfying a mutually exclusive constraint condition, when the height constraint is satisfied, that is, when a commodity height of each commodity in the potential layout combination is less than the height of the cargo lane, the potential layout combination is an effective layout combination. On the contrary, the potential layout combination will be removed and may not be used as an effective layout combination.

Specifically, for any potential layout combination S, $height_i$ is a commodity height of the $i$th category in the combination S, $height_{scale}$ is a cargo lane height of the gravity container, commodity heights of each category in the combination S are determined sequentially, and a maximum height H of the $i$th category is obtained, which meets the following equation (2):

$$H = \max|height_i|, \qquad i \in S$$

A relation between H and the cargo lane height $height_{scale}$ is determined, and if $max|height_i| > height_{scale}$, $i \in S$ is satisfied, then the combination S is excluded, otherwise, the combination S is the effective layout combination (in a case of satisfying a mutually exclusive constraint condition).

Similarly, some commodities are mutually exclusive and may not be placed in a same cargo lane, namely the mutually exclusive constraint in the business constraint condition. For example, if commodity coffee is required to be warm, while commodity ice-cream is required to be ice, then the warm coffee commodity and the cold ice-cream are mutually exclusive commodities, and may not be placed on the same cargo lane as components of the same combination. If the height constraint condition is satisfied, and the mutually exclusive constraint is satisfied, that is, the commodities in the potential layout combination are not mutually exclusive, the potential layout combination is an effective layout combination, otherwise, the potential layout combination is removed and may not be used as an effective layout combination.

Specifically, for a potential layout combination S, which includes at least two categories of commodity $sku_1$ and commodity $sku_2$, if ($sku_1$, $sku_2$) are mutually exclusive categories, the combination S is excluded. On the contrary, the combination S is an effective layout combination (in a case of satisfying the height constraint condition).

It should be noted that in embodiments of the present disclosure, the above-mentioned mutually exclusive constraint and height constrain of the business constraint condition actually are constraints that may be made simultaneously to all potential layout combinations, which will not be repeated here.

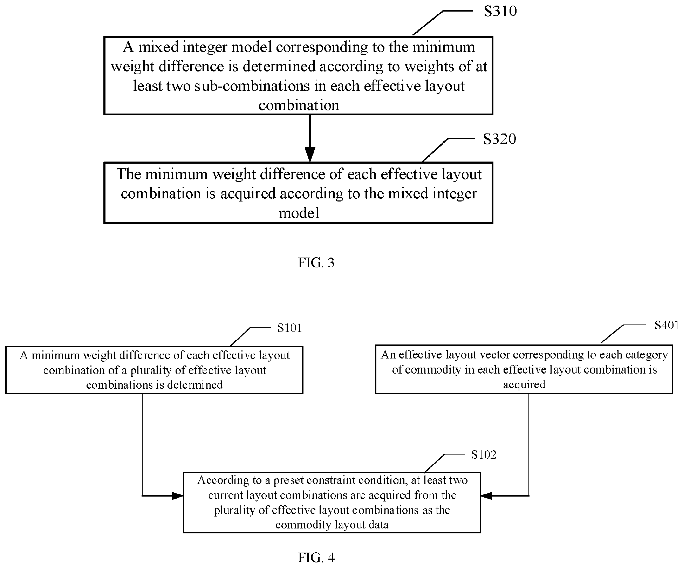

FIG. 3 schematically shows a flowchart of a method of acquiring commodity layout data according to another embodiment of the present disclosure.

As shown in FIG. 3, according to embodiments of the present disclosure, sub-operation S310 and sub-operation S320 are included in operation S101 of determining a minimum weight difference of each effective layout combination in a plurality of effective layout combinations.

In sub-operation S310, a mixed integer model corresponding to the minimum weight difference is determined according to weights of at least two sub-combinations in each effective layout combination.

In sub-operation S320, the minimum weight difference of each effective layout combination is acquired according to the mixed integer model.

In each effective layout combination S, at least two sub-combinations are required. For example, a single effective layout combination S includes a sub-combination combi and a sub-combination comb2. There are at least two categories of commodities in each sub-combination, that is, there are at least three categories of commodities in each effective layout combination. The number of commodity categories in each sub-combination is limited by the constraint on user's taking, i.e., presetting that a user takes a plurality of commodities at one time during an actual use of the gravity container, wherein the maximum number of commodities taken by the user from a single electronic scale is 2 categories. Therefore, the number of commodity categories in each sub-combination may be 2 categories. There is a difference of commodity category between each sub-combination, that is, each sub-combination is different from each other.

In embodiments of the present disclosure, the weight of each sub-combination meets a certain planning constraint, and the planning constraint is a calculation condition limited by a weight of the $i^{th}$ category commodity in a corresponding effective layout combination S, a measurement error of each electronic scale in the gravity container, and an individual error of the $i^{th}$ category commodity. For example, a single effective layout combination S includes a sub-combination combi and a sub-combination comb2, which meet the following equation (3) for the planning constraint:

$$weight_{comb_1} = a \cdot (w_i + \varepsilon_{scale} + \varepsilon_i) + b \cdot (w_j + \varepsilon_{scale} + \varepsilon_j)$$

$$weight_{comb_2} = c \cdot (w_k + \varepsilon_{scale} + \varepsilon_k) + d \cdot (w_l + \varepsilon_{scale} + \varepsilon_l)$$

$\forall i, j \in S$, $w_i$ represents the weight of the $i^{th}$ category commodity in S, $\varepsilon_{scale}$ represents the measurement error of the electronic scale, $\varepsilon_i$ represents the individual error of the $i^{th}$ category commodity, a, b satisfy: $a + b \leq p$, c, d satisfy: $c + d \leq p$, p is the maximum number of categories of commodities that the user may take per time, which is limited by the constraint on user's taking. It should be noted that the error $\varepsilon_i$ and the error $\varepsilon_j$ are all decision variables, and the above-mentioned parameters may meet the following equation (4):

$$|\varepsilon_{scale}| \leq E_{scale}$$

$$|\varepsilon_i| \leq E_i$$

$E_{scale}$ is a limit measurement error of the electronic scale, $E_i$ is a limit individual error of the $i^{th}$ category commodity.

Further, on the basis of the above disclosure, it may be further determined that the mixed integer model corresponding to the minimum weight difference in the above-mentioned single effective layout combination meets the following objective function equation (5):

$$\min \left| weight_{comb_1} - weight_{comb_2} \right|$$

By performing further target equivalence transformation on the above-mentioned equation (5), the following equation (6) may be obtained:

min z

$$\text{s.t} \quad z \leq weight_{comb_1} - weight_{comb_2}$$

$$z \leq weight_{ccomb_2} - weight_{comb_1}$$

Take the above-mentioned equation (6) as the mixed integer model, and use the above-mentioned equation (3) and equation (4) to solve he mixed integer model, that is, the minimum weight difference Z corresponding to any sub-combination of each effective layout combination may be obtained. The minimum weight difference is mainly used in the weight constraint condition, as an important indicator to evaluate the effective layout combination S. The smaller the minimum weight difference Z is, the lower the weight differentiation of the combination S is, the more likely it is that the weights of the two sub-combinations are similar, resulting in the electronic scale being unable to determine the commodity category taken by the user based on the weight. On the contrary, the greater the minimum weight difference Z is, the higher the weight differentiation of the combination S is, and the combination S may better serve as the commodity category combination data in embodiments of the present disclosure.

FIG. 4 schematically shows a flowchart of a method of acquiring commodity layout data according to another embodiment of the present disclosure.

As shown in FIG. 4, according to embodiments of the present disclosure, the method further includes operation S401 before operation S102 of acquiring, according to a preset constraint condition, at least two current layout combinations from the plurality of effective layout combinations as the commodity layout data.

In operation S401, an effective layout vector corresponding to each category of commodity in each effective layout combination is acquired.

Specifically, for each effective layout combination S, it is assumed that the commodities of each category contained in the combination S meet the following vector relationship: $V_t = [V_t^1, V_t^2, \cdots, V_t^n]$, where $V_t^i$ represents the i$^{th}$ component of the vector $V_t$, $1 \leq i \leq n$, if $V_t^i \in \{0,1\}$, when $V_t^i = 1$, it means that the combination S contains the commodity of the i$^{th}$ category. On the contrary, when $V_t^i = 0$, it means that the combination S does not contain the commodity of the i$^{th}$ category. That is, the effective layout vector $V_t$ may be used to determine the number of categories of commodities and commodity names in the combination S.

According to embodiments of the present disclosure, the preset constraint condition further includes a category constraint between a combined layout model of each effective layout combination and the effective layout vector, and a cargo lane constraint between the combined layout model, the effective layout vector and the number of cargo lanes of the gravity container.

At this point, based on the solution of the minimum weight difference, the effective layout combinations may be further screened, and the plurality of current layout combinations in the plurality of effective layout combinations may be determined as the commodity layout data of embodiments of the present disclosure.

First, a layout premise of embodiments of the present disclosure is that only one commodity combination is allocated for a single cargo lane of a single gravity container. Therefore, for a plurality of effective layout combinations, the commodity combination layout needs to meet the following equation (7):

$$\sum_t allot_{jt} = 1, \forall j$$

$$\max \sum_i c_i$$

Where $allot_{jt}$ is used to reflect whether the $t^{th}$ commodity combination is allocated in the $j^{th}$ cargo lane. Specifically, when a summation value of $allot_{jt}$ of the above-mentioned equation (7) is 1, it means that the $t^{th}$ commodity combination is allocated to the $j^{th}$ cargo lane of the gravity container. On the contrary, the $t^{th}$ commodity combination may not be allocated to the $i^{th}$ cargo lane.

Where $c_i$ is used to form the commodity combination layout model of each effective layout combination to reflect whether the current commodity combination of the allocated commodity layout data in all cargo lanes contains the commodity of the $i^{th}$ category. Specifically, if the number of times that the current commodity combination allocated for all cargo lanes contains the commodity of the $i^{th}$ category is greater than 1, then $c_i = 1$, that is, the current commodity combination includes the commodity of the $i^{th}$ category. When the number of times is equal to 0, $c_i = 0$, then the current commodity combination does not include the commodity of the $i^{th}$ category. That is, according to the combined layout model, a plurality of current layout combinations in all effective layout combinations may be solved. The combination layout model is an objective function of the commodity category combination in embodiments of the present disclosure, and is the same type of model as the above-mentioned mixed integer model.

Further, in order to solve the combined layout model corresponding to the above-mentioned objective function, the above-mentioned objective function needs to meet the following equation (8):

$$\sum_j \sum_t allot_{jt} \cdot V_t^i \leq c_i \cdot M, \forall i$$

$$\sum_j \sum_t allot_{jt} \cdot V_t^i \geq c_i, \forall i$$

Where M is a large number, and may be set to meet: $M = 10^6$; $V_t^i$ is a vector of the effective layout vector $V_t$ corresponding to the combination S containing the $i^{th}$ category commodity. This may be used to fix the relationship between $c_i$ and $allot_{jt}$ to meet the maximum number of commodity categories included in the corresponding single current layout combination S, that is, the equation (8) is the above-mentioned category constraint.

In addition, for the above-mentioned constraint on the placement of commodity of the same category, the commodity of the same category needs to be placed in as few cargo lanes as possible, and no more than R cargo lanes at most, thus the cargo lane constraint meet the following equation (9):

$$\sum_j \sum_t allot_{jt} \cdot V_t^i \leq R, \forall i$$

R refers to the maximum number of cargo lanes that may be distributed for a single category of commodity, and is an upper limit of the number of the cargo lanes.

It should be noted that if a plurality of effective layout combinations are to be screened, and a plurality of current layout combinations are to be obtained, the category constraint, cargo lane constraint and weight constraint described above need to be simultaneously used as the preset constraint for screening. For a lower limit weight difference lb in a plurality of effective layout combinations, the lower limit weight difference lb needs to meet the following equation (10):

$$lb \leq \sum_t diff_t, \ \forall t$$

$$lb \geq \theta$$

Where $diff_t$ is the above-mentioned minimum weight difference Z corresponding to any sub-combination of each effective layout combination, and is the maximum error identified by the electronic scale. θ is a threshold value of a weight difference change that may be identified by an electronic scale, so that the electronic scale may identify a gravity change corresponding to each user's taking action, and the change must be an effective value for reflecting a weight change identification ability of the electronic scale.

Therefore, by solving the above-mentioned equation (7), the commodity layout data corresponding to each cargo lane in the gravity container, i.e., a plurality of current layout combinations, may be obtained. Applying the commodity layout data to the gravity container for commodity layout may improve an identification rate of the container for the change of commodity category and commodity number at a minimum operating cost when the user takes the commodity, and also may ensure a maximum utilization rate of the container and a diversification of commodity categories.

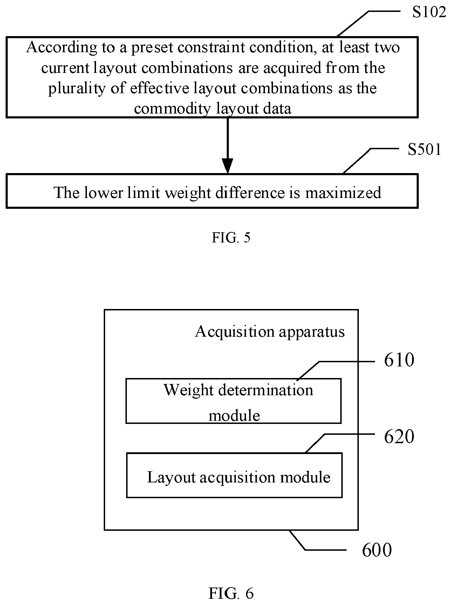

FIG. 5 schematically shows a flowchart of a method of acquiring commodity layout data according to another embodiment of the present disclosure.

As shown in FIG. 5, according to embodiments of the present disclosure, the method further includes operation S501 after operation S102 of acquiring, according to a preset constraint condition, at least two current layout combinations from the plurality of effective layout combinations as the commodity layout data.

In operation S501, when the number of categories of commodities in the at least two current layout combinations is the same as the number of categories of to-be-laid-out commodities, the lower limit weight difference is maximized to determine the at least two current layout combinations as the commodity layout data.

In a process of solving the above-mentioned objective function of the combined layout model, a plurality of effective layout combinations may be screened by the preset constraint condition to obtain a plurality of current layout combinations as the commodity layout data, and the commodity layout data may be applied to the commodity layout of the gravity container. If the number of commodity categories $\sum_i c_i$ in these current layout combinations is the same as the number n of categories of to-be-laid-out commodities proposed by a merchant in the commodity pool, that is, s.t. $\sum_i c_i = n$, it is necessary to maximize the above-mentioned lower limit weight difference in a plurality of current layout combinations, namely, to meet: max $lb$, and then solve the above-mentioned target function corresponding to the combination layout model twice to ensure the accuracy and applicability of the final commodity layout data.

Therefore, according to the above-mentioned embodiments of the present disclosure, an optimal combination of commodity categories may be acquired as the commodity layout data based on the fixed characteristic attributes of the commodity, cargo lane and the like, taking into account the individual error of the commodity and the measurement error of the electronic scale, so as to uniquely determine the commodity category taken by the user when a reading of the electronic scale changes.

FIG. 6 schematically shows a composition diagram of an apparatus of acquiring commodity layout data according to an embodiment of the present disclosure. It should be noted that FIG. 6 is only an example of the composition and architecture of the apparatus 600 that may be applied in embodiments of the present disclosure to help those skilled in the art understand the technical content of the present disclosure, and does not mean that embodiments of the present disclosure may not be used for other devices, systems, environments or scenarios.

As shown in FIG. 6, another aspect of the present disclosure provides an apparatus 600 of acquiring commodity layout data, including a weight determination module 610 and a layout acquisition module 620. The weight determination module 610 is used to determine a minimum weight difference of each effective layout combination in a plurality of effective layout combinations. The layout acquisition module 620 is used to acquire, according to a preset constraint condition, at least two current layout combinations from the plurality of effective layout combinations as the commodity layout data for a commodity layout of a cargo lane in a gravity container. The preset constraint condition includes a weight constraint between a lower limit weight difference corresponding to the plurality of effective layout combinations and a minimum weight difference corresponding to a current layout combination of the at least two current layout combinations.

It should be noted that the above-mentioned acquisition apparatus is used to implement the above-mentioned method of acquiring commodity layout data, which will not be described here.

Those skilled in the art should understand that any number of modules, sub-modules, units, sub-units, or at least part of the function of any number thereof according to embodiments of the present disclosure may be implemented in one module. Any one or more of the modules, sub-modules, units, and sub-units according to embodiments of the present disclosure may be divided into a plurality of modules for implementation. Any one or more of the modules, sub-modules, units, sub-units according to embodiments of the present disclosure may be implemented at least partially as a hardware circuit, such as a field programmable gate array (FPGA), a programmable logic array (PLA), a system on a chip, a system on a substrate, a system on a package, an application specific integrated circuit (ASIC), or may be implemented by any other reasonable means of hardware or firmware that integrates or packages a circuit, or may be implemented in any one of or a suitable combination of three implementation methods of software, hardware, and firmware. Alternatively, one or more of the modules, sub-modules, units, and sub-units according to embodiments of the present disclosure may be implemented at least partially as a computer program module, which when executed, may perform a corresponding function.

For example, any number of the weight determination module 610 and the layout acquisition module 620 may be combined into one module to be implemented or any one of the modules may be divided into a plurality of modules. Alternatively, at least part of the function of one or more of these modules may be combined with at least part of the function of other modules and implemented in one module. According to embodiments of the present disclosure, at least one of the weight determination module 610 and the layout acquisition module 620 may be implemented at least partially as a hardware circuit, such as a field programmable gate array (FPGA), a programmable logic array (PLA), a system on a chip, a system on a substrate, a system on a package, an application specific integrated circuit (ASIC), or may be implemented by any other reasonable means of hardware or firmware that integrates or packages a circuit, or may be implemented in any one of or a suitable combination of three implementation methods of software, hardware and firmware. Alternatively, at least one of the weight determination module 610 and the layout acquisition module 620 may be implemented at least partially as a computer program module, which when executed, may perform a corresponding function.

Another aspect of the present disclosure provides a gravity container, including: the above-mentioned apparatus of acquiring commodity layout data used to implement the above-mentioned method of acquiring commodity layout data, and the function realization will not repeated here.

The gravity container may have five layers of shelves, each layer of shelves may have two cargo lanes, and a bottom of each cargo lane may be correspondingly provided with an electronic scale. The gravity container may be used for the above-mentioned method.

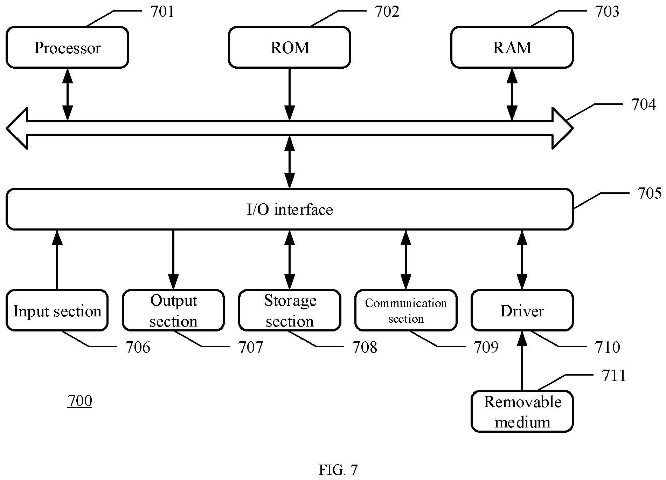

FIG. 7 schematically shows a block diagram of an electronic device suitable for realizing the above-mentioned method of acquiring commodity layout data according to embodiments of the present disclosure. The electronic device shown in FIG. 7 is only an example and should not limit the function and scope of use of embodiments of the present disclosure.

Another aspect of the present disclosure provides an electronic device, including: one or more processors; and a storage apparatus for storing one or more programs, wherein, the one or more programs, when executed by the one or more processors, cause the one or more processors to implement the method described above.

As shown in FIG. 7, the electronic device 700 according to embodiments of the present disclosure includes a processor 701 that may perform various appropriate actions and processes according to programs stored in a read-only memory (ROM) 702 or programs loaded from the storage portion 708 into a random access memory (RAM) 703. The processor 701 may include, for example, a general-purpose microprocessor (e.g., a CPU), an instruction set processor and/or a related chipset and/or a special-purpose microprocessor (e.g., an application-specific integrated circuit (ASIC)), etc. The processor 701 may further include an on-board memory for caching purposes. The processor 701 may include a single processing unit or a plurality of processing units for performing different actions of a method flow according to embodiments of the present disclosure.

In the RAM 703, various programs and data required for the operation of the device 700 are stored. The processor 701, the ROM 702 and the RAM 703 are connected to each other through a bus 704. The processor 701 performs various operations of the method flow according to embodiments of the present disclosure by executing the programs in the ROM 702 and/or the RAM 703. It should be noted that the programs may also be stored in one or more memories other than the ROM 702 and the RAM 703. The processor 701 may also perform various operations of the method flow according to embodiments of the present disclosure by executing the programs stored in the one or more memories.

According to embodiments of the present disclosure, the device 700 may further include an input/output (I/O) interface 705, and the input/output (I/O) interface 705 is also connected to the bus 704. The device 700 may further include one or more of the following components connected to the I/O interface 705: an input portion 706 including a keyboard, a mouse, etc.; an output portion 707 including a cathode ray tube (CRT), a liquid crystal display (LCD), etc., and a speaker, etc.; a storage portion 708 including a hard disk, etc.; and a communication portion 709 including a network interface card such as a LAN card, a modem, etc. The communication portion 709 performs communication processing via a network such as the Internet. A drive 710 is also connected to the I/O interface 705 as needed. A removable medium 711, such as a magnetic disk, an optical disk, a magneto-optical disk, a semiconductor memory, etc., is mounted on the drive 710 as needed so that a computer program read therefrom is installed into the storage portion 708 as needed.

According to embodiments of the present disclosure, the method flow according to embodiment of the present disclosure may be implemented as a computer software program. For example, the embodiment of the present disclosure includes a computer program product including a computer program carried on a computer-readable storage medium, and the computer program contains program code for performing the method illustrated in the flowchart. In such an embodiment, the computer program may be downloaded from the network via the communication portion 709 and installed, and/or installed from the removable medium 711. The computer program, when executed by the processor 701, performs the functions described above defined in the system of embodiments of the present disclosure. According to embodiments of the present disclosure, the system, device, apparatus, module, unit, etc. described above may be implemented by the computer program module.

Another aspect of the present disclosure provides a computer-readable storage medium having executable instructions therein, wherein the instructions, when executed by a processor, cause the processor to implement the method described above.

The computer-readable storage medium of the present disclosure may be included in the device/apparatus/system described in the above-mentioned embodiments, and may also exist alone without being assembled into the device/apparatus/system. The computer-readable storage medium described above carries one or more programs, and when the one or more programs are executed, the method according to embodiments of the present disclosure may be implemented.

According to embodiments of the present disclosure, the computer-readable storage medium may be a non-volatile computer-readable storage medium. For example, the computer-readable storage medium may include but not limited to: a portable computer disk, a hard disk, a random access memory (RAM), a read only memory (ROM), an erasable programmable read only memory (EPROM or flash memory), a portable compact disk read only memory (CD-ROM), an optical storage device, a magnetic storage device, or any suitable combination of the above. In the present disclosure, the computer-readable storage medium may be any tangible medium that contains or stores a program that may be used by or in conjunction with an instruction execution system, apparatus, or device. For example, according to embodiments of the present disclosure, the computer-readable storage medium may include one or more memories other than the ROM 702 and/or the RAM 703 and/or the ROM 702 and the RAM 703 described above.

Another aspect of embodiments of the present disclosure provide a computer program. The computer program includes computer executable instructions, wherein the instructions, when executed, are used to implement the method described above.

So far, embodiments of the present disclosure have been described in detail in combination with the drawings.

The flowcharts and block diagrams in the drawings illustrate the architecture, functionality, and operation of possible implementations of systems, methods and computer program products according to various embodiments of the present disclosure. In this regard, each block in the flowcharts or block diagrams may represent a module, program segment, or portion of code, which contains one or more executable instructions for implementing the specified logical function. It should also be noted that, in some alternative implementations, the functions noted in the blocks may occur out of the order noted in the drawings. For example, two blocks shown in succession may, in fact, be executed substantially concurrently, or the two blocks may sometimes be executed in a reverse order, depending upon the functionality involved. It should also be noted that each block of the block diagrams or flowcharts, and combinations of the blocks in the block diagrams or flowcharts, may be implemented by using a special purpose hardware-based system that performs the specified functions or operations, or may be implemented using a combination of a special purpose hardware and computer instructions.

Those skilled in the art will appreciate that features recited in the various embodiments and/or the claims of the present disclosure may be combined and/or incorporated in a variety of ways, even if such combinations or incorporations are not clearly recited in the present disclosure. In particular, the features recited in the various embodiments and/or the claims of the present disclosure may be combined and/or incorporated without departing from the spirit and teachings of the present disclosure, and all such combinations and/or incorporations fall within the scope of the present disclosure.

Embodiments of the present disclosure have been described above. However, these examples are for illustrative purposes only, and are not intended to limit the scope of the present disclosure. Although the various embodiments are described above separately, this does not mean that the measures in the various embodiments may not be advantageously used in combination. The scope of the present disclosure is defined by the appended claims and their equivalents. Without departing from the scope of the present disclosure, those skilled in the art may make various substitutions and modifications, and these substitutions and modifications should all fall within the scope of the present disclosure.

The specific embodiments described above further explain objectives, technical solutions and beneficial effects of the present disclosure in detail, and it should be understood that the specific embodiments described above are only specific embodiments of the present disclosure, and should not be used to limit the present disclosure, and any modifications, equivalent substitutions, improvements and the like made within the spirit and principle of the present disclosure should be included in the protection scope of the present disclosure.

**Claims**

1. A method of acquiring commodity layout data, comprising:

   determining a minimum weight difference of each effective layout combination of a plurality of effective layout combinations; and

acquiring, according to a preset constraint condition, at least two current layout combinations from the plurality of effective layout combinations as the commodity layout data for a commodity layout of a gravity container; wherein the preset constraint condition comprises a weight constraint between a lower limit weight difference corresponding to the plurality of effective layout combinations and a minimum weight difference corresponding to a current layout combination of the at least two current layout combinations.

2. The method according to claim 1, wherein,
before determining a minimum weight difference of each effective layout combination of a plurality of effective layout combinations, the method further comprises:

determining a plurality of potential layout combinations according to the number of categories of to-be-laid-out commodities; and
determining the plurality of effective layout combinations from the plurality of potential layout combinations according to a business constraint condition.

3. The method according to claim 2, wherein,
the business constraint condition comprises a height constraint between a commodity height of each category of commodity in each effective layout combination and a height of a cargo lane of the gravity container, and a mutually exclusive constraint between at least two categories of commodities in each effective layout combination corresponding to any cargo lane of the gravity container.

4. The method according to claim 1, wherein,
the determining a minimum weight difference of each effective layout combination of a plurality of effective layout combinations comprises:

determining a mixed integer model corresponding to the minimum weight difference according to weights of at least two sub-combinations in each effective layout combination; and
acquiring the minimum weight difference of each effective layout combination according to the mixed integer model.

5. The method according to claim 1, wherein,
before the acquiring, according to a preset constraint condition, at least two current layout combinations from the plurality of effective layout combinations as the commodity layout data, the method further comprises:
acquiring an effective layout vector corresponding to each category of commodity in each effective layout combination.

6. The method according to claim 5, wherein,
the preset constraint condition further comprises a category constraint between a combined layout model of each effective layout combination and the effective layout vector, and a cargo lane constraint between the combined layout model, the effective layout vector and the number of cargo lanes of the gravity container.

7. The method according to claim 1, wherein,
the acquiring, according to a preset constraint condition, at least two current layout combinations from the plurality of effective layout combinations as the commodity layout data, the method further comprises:
maximizing the lower limit weight difference when the number of categories of commodities in the at least two current layout combinations is the same as the number of categories of to-be-laid-out commodities, so as to determine the at least two current layout combinations as the commodity layout data.

8. An apparatus of acquiring commodity layout data, comprising:

a weight determination module configured to determine a minimum weight difference of each effective layout combination of a plurality of effective layout combinations; and
a layout acquisition module configured to acquire, according to a preset constraint condition, at least two current layout combinations from the plurality of effective layout combinations as the commodity layout data for a commodity layout of a cargo lane in a gravity container;
wherein, the preset constraint condition comprises a weight constraint between a lower limit weight difference corresponding to the plurality of effective layout combinations and a minimum weight difference corresponding to a current layout combination of the at least two current layout combinations.

9. A gravity container, comprising the apparatus of claim 8 to implement the method of any one of claims 1 to 7.

10. An electronic device, comprising:

   one or more processors; and
   a storage apparatus for storing one or more programs,
   wherein, the one or more programs, when executed by the one or more processors, cause the one or more processors to implement the method of any one of claims 1 to 7.

11. A computer-readable storage medium having executable instructions therein, wherein the instructions, when executed by a processor, cause the processor to implement the method of any one of claims 1 to 7.

S101

A minimum weight difference of each effective layout combination of a plurality of effective layout combinations is determined

S102

According to a preset constraint condition, at least two current layout combinations are acquired from the plurality of effective layout combinations as the commodity layout data

FIG. 1

S201

A plurality of potential layout combinations are determined according to the number of categories of to-be-laid-out commodities

S202

The plurality of effective layout combinations are determined from the plurality of potential layout combinations according to a business constraint condition

S101

A minimum weight difference of each effective layout combination in a plurality of effective layout combinations is determined

FIG. 2

S310

A mixed integer model corresponding to the minimum weight difference is determined according to weights of at least two sub-combinations in each effective layout combination

S320

The minimum weight difference of each effective layout combination is acquired according to the mixed integer model

FIG. 3

S101

A minimum weight difference of each effective layout combination of a plurality of effective layout combinations is determined

S401

An effective layout vector corresponding to each category of commodity in each effective layout combination is acquired

S102

According to a preset constraint condition, at least two current layout combinations are acquired from the plurality of effective layout combinations as the commodity layout data

FIG. 4

S102

According to a preset constraint condition, at least two current layout combinations are acquired from the plurality of effective layout combinations as the commodity layout data

S501

The lower limit weight difference is maximized

FIG. 5

Acquisition apparatus

Weight determination module — 610

Layout acquisition module — 620

600

FIG. 6

```
              ┌─── 701          ┌─── 702          ┌─── 703
  ┌──────────────┐      ┌──────────────┐    ┌──────────────┐
  │  Processor   │      │     ROM      │    │     RAM      │
  └──────────────┘      └──────────────┘    └──────────────┘
          ↕                    ↓                    ↕
                                                         ┌─── 704
  ◁═══════════════════════════════════════════════════▷

                               ↕
                                                         ┌─── 705
  ┌─────────────────────────────────────────────────────┐
  │                    I/O interface                    │
  └─────────────────────────────────────────────────────┘
       ↕            ↓            ↕            ↕            ↕
  ┌─────────┐  ┌─────────┐  ┌─────────┐  ┌──────────────┐  ┌─────────┐
  │  Input  │  │ Output  │  │ Storage │  │Communication │  │ Driver  │
  │ section │  │ section │  │ section │  │   section    │  │         │
  └─────────┘  └─────────┘  └─────────┘  └──────────────┘  └─────────┘
     └─ 706       └─ 707       └─ 708       └─ 709           └─ 710
                                                              ↑
  700                                                    ┌─── 711
                                                    ┌──────────────┐
                                                    │  Removable   │
                                                    │   medium     │
                                                    └──────────────┘
```

FIG. 7

## INTERNATIONAL SEARCH REPORT

| | International application No. |
|---|---|
| | **PCT/CN2021/125244** |

**A. CLASSIFICATION OF SUBJECT MATTER**

G06Q 10/04(2012.01)i; G06Q 30/06(2012.01)i; G07F 11/00(2006.01)i; G07F 9/02(2006.01)i

According to International Patent Classification (IPC) or to both national classification and IPC

**B. FIELDS SEARCHED**

Minimum documentation searched (classification system followed by classification symbols)

G06Q10/-;G06Q30/-;G07F11/-;G07F9/-

Documentation searched other than minimum documentation to the extent that such documents are included in the fields searched

Electronic data base consulted during the international search (name of data base and, where practicable, search terms used)

CNTXT, WPABSC, ENTXTC, VEN, ENTXT, CNKI, IEEE, 互联网检索: 货柜, 货机, 售货, 贩卖, 销售, 售卖, 柜, 机, 设备, 装置, 商品, 物品, 物件, 产品, 重量, 差, 变化, 实际, 标准, 高度, 数量, 品类, 种类, 类别, 组合, 布局, 摆放, vender, vendor, sell +, sal+, device?, goods, commodity, product+, weight, variation, differ+, var+, number, height, type, class, sort, combination, layout, set+

**C. DOCUMENTS CONSIDERED TO BE RELEVANT**

| Category* | Citation of document, with indication, where appropriate, of the relevant passages | Relevant to claim No. |
|---|---|---|
| PX | CN 112348248 A (BEIJING JINGDONG GANSHI TECHNOLOGY CO., LTD.) 09 February 2021 (2021-02-09)<br>claims 1-11 | 1-11 |
| X | CN 109685980 A (SHENZHEN YINGQI TECHNOLOGY CO., LTD.) 26 April 2019 (2019-04-26)<br>description, paragraphs [0016]-[0028] | 1-11 |
| X | CN 109632066 A (SHENZHEN YINGQI TECHNOLOGY CO., LTD.) 16 April 2019 (2019-04-16)<br>description, paragraphs [0015]-[0027] | 1-11 |
| A | CN 110428548 A (SICHUAN HONGMEI INTELLIGENT TECH CO., LTD.) 08 November 2019 (2019-11-08)<br>entire document | 1-11 |
| A | CN 109649916 A (SHANGHAI JINGDONGDAOJIA YUANXIN INFORMATION TECHNOLOGY CO., LTD.) 19 April 2019 (2019-04-19)<br>entire document | 1-11 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **30 December 2021** | **20 January 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2021/125244**

| C. | DOCUMENTS CONSIDERED TO BE RELEVANT | |
|---|---|---|
| Category* | Citation of document, with indication, where appropriate, of the relevant passages | Relevant to claim No. |
| A | US 10318917 B1 (AMAZON TECHNOLOGY INC.) 11 June 2019 (2019-06-11) entire document | 1-11 |

Form PCT/ISA/210 (second sheet) (January 2015)

INTERNATIONAL SEARCH REPORT
Information on patent family members

International application No.

**PCT/CN2021/125244**

| Patent document cited in search report | | | Publication date (day/month/year) | Patent family member(s) | | | Publication date (day/month/year) |
|---|---|---|---|---|---|---|---|
| CN | 112348248 | A | 09 February 2021 | None | | | |
| CN | 109685980 | A | 26 April 2019 | None | | | |
| CN | 109632066 | A | 16 April 2019 | None | | | |
| CN | 110428548 | A | 08 November 2019 | None | | | |
| CN | 109649916 | A | 19 April 2019 | CN | 109649916 | B | 26 January 2021 |
| US | 10318917 | B1 | 11 June 2019 | None | | | |

Form PCT/ISA/210 (patent family annex) (January 2015)